# EUROPEAN PATENT SPECIFICATION

(11) **EP 4 557 036 B1**
(45) Date of publication and mention of the grant of the patent: **26.11.2025**
(21) Application number: 24202185.5
(22) Date of filing: 24.09.2024
(51) Int. Cl.: G05D 1/225, G05D 1/249, G05D 1/646, G05B 23/02, G05D 105/45, G05D 109/10, G05D 111/10, G06T 7/00, G06T 7/73, G05D 107/70

(54) **SYSTEM, DEVICE, AND METHOD**
SYSTEM, VORRICHTUNG UND VERFAHREN
SYSTÈME, DISPOSITIF ET PROCÉDÉ

(30) Priority: 15.11.2023 JP 2023194320
(43) Date of publication of application: 21.05.2025
(73) Proprietor: TOYOTA JIDOSHA KABUSHIKI KAISHA, Aichi-ken, 471-8571 (JP)
(72) Inventor: YOKOYAMA, Daiki, Toyota-shi, 471-8571 (JP); SAITO, Yasuhiro, Kariya-shi, 448-8666 (JP)
(74) Representative: J A Kemp LLP

(56) References cited:
- US-A1- 2020 198 714

## Description

### CROSS REFERENCE TO RELATED APPLICATIONS

This application claims priority to Japanese Patent Application No. 2023-194320, filed November 15, 2023,

### BACKGROUND

### FIELD

The present disclosure relates to a system, a device, and a method that estimate at least one of the location and position of a moving object.

There is a known technique that causes a vehicle to run by remote control in a step of manufacturing the vehicle (for example, Japanese Patent Application Publication (Translation of PCT Application) No. 2017-538619).

Another example of a prior art is US2020/198714A1.

In moving a moving object such as a vehicle by remote control, a process of estimating the location or position of the moving object is performed. The location or position of the moving object may be estimated by making a comparison between appearance information about the moving object acquired using a camera or LiDAR (Light Detection and Ranging) and comparison information prepared in advance. However, the appearance of the moving object changes in response to progress of a manufacturing step. This may cause failure to obtain correct estimation result in estimating the location or position of the moving object while the moving object is being manufactured.

### SUMMARY

The invention is set forth in the independent claims 1, 8, 9 and in the dependent claims 2 to 7. The present disclosure is feasible in the following aspects,

According to a first aspect of the present disclosure, a system is provided. The system comprises: a sensor configured to acquire an appearance information containing the appearance of a moving object movable by unmanned driving; a step information acquisition unit configured to acquire a step information about progress of a step of manufacturing the moving object; a comparison information acquisition unit configured to acquire a comparison information representing the appearance of the moving object responsive to the step information; and an estimation unit configured to estimate at least one of the location and position of the moving object by making a comparison between the comparison information and the appearance information.

According to the system of this aspect, it is possible to estimate at least one of the location and position of the moving object correctly.

In the system of the above-described aspect, the sensor may acquire the appearance information repeatedly, the step information acquisition unit may acquire the step information repeatedly, if a content of the step information acquired currently by the step information acquisition unit is the same as a content of the step information acquired last time, the comparison information acquisition unit may not acquire the comparison information responsive to the step information acquired currently, and the estimation unit may make a comparison between the comparison information same as that used in a comparison made last time and the appearance information.

According to the system of this aspect, if the content of the step information acquired currently by the step information acquisition unit is the same as the content of the step information acquired last time, the comparison information acquisition unit does not acquire the comparison information responsive to the step information acquired currently. This achieves reduction in processing burden on the comparison information acquisition unit to be caused by acquiring the same comparison information.

The system of the above-described aspect may further comprise a failure detection unit configured to detect mounting failure of a part at the moving object using a degree of match between the appearance of the moving object represented by the comparison information and the appearance of the moving object contained in the appearance information.

According to the system of this aspect, it is possible to detect mounting failure of a part at the moving object using the failure detection unit.

The system of the above-described aspect may further comprise a failure handling unit configured to perform at least one of a process of stopping moving of the moving object and a process of notifying the occurrence of the mounting failure if the mounting failure is detected by the failure detection unit.

According to the system of this aspect, it is possible to handle mounting failure of a part at the moving object if such mounting failure has occurred.

The system of the above-described aspect may further comprise a database containing association between the step information and the comparison information. The comparison information acquisition unit may acquire the comparison information that is associated in the database with the step information acquired by the step information acquisition unit.

According to the system of this aspect, it is possible to acquire the comparison information suitable for estimating at least one of the location and position of the moving object correctly using the database.

The system of the above-described aspect may further comprise a step management device configured to manage manufacture of the moving object. The step information acquisition unit may acquire the step information from the step management device.

According to the system of this aspect, it is possible to acquire the step information easily.

The system of the above-described aspect may further comprise: a plurality of the sensors; and a database containing association between identification information about each of the sensors and the comparison information. The step information acquisition unit may acquire the identification information about the sensor as the step information by which the appearance information has been acquired. The comparison information acquisition unit may acquire the comparison information that is associated in the database with the identification information about the sensor by which the appearance information has been acquired.

According to the system of this aspect, it is possible to acquire the comparison information suitable for estimating at least one of the location and position of the moving object correctly using the database.

According to a second aspect of the present disclosure, a device is provided. The device comprises: an appearance information acquisition unit configured to acquire an appearance information from a sensor, the appearance information being acquired by the sensor and containing the appearance of a moving object movable by unmanned driving; a step information acquisition unit configured to acquire a step information about progress of a step of manufacturing the moving object; a comparison information acquisition unit configured to acquire a comparison information representing the appearance of the moving object responsive to the step information; and an estimation unit configured to estimate at least one of the location and position of the moving object by making a comparison between the comparison information and the appearance information.

According to the device of this aspect, it is possible to estimate at least one of the location and position of the moving object correctly.

According to a third aspect of the present disclosure, a method is provided. The method comprises: acquiring an appearance information containing the appearance of a moving object movable by unmanned driving; acquiring a step information about progress of a step of manufacturing the moving object; acquiring a comparison information representing the appearance of the moving object responsive to the step information; and estimating at least one of the location and position of the moving object by making a comparison between the comparison information and the appearance information.

According to the method of this aspect, it is possible to estimate at least one of the location and position of the moving object correctly.

The present disclosure is feasible in various aspects other than the system, the device, and the method. For example, the present disclosure is feasible in aspects including a computer program and a recording medium storing the computer program.

### BRIEF DESCRIPTION OF THE DRAWINGS

Fig. 1 is an explanatory view showing the configuration of a system according to a first embodiment;
Fig. 2 is an explanatory view showing a state where a vehicle moves by remote control in a factory;
Fig. 3 is a flowchart showing a substance of a running control process according to the first embodiment;
Fig. 4 is a flowchart showing a substance of a vehicle location information acquiring process according to the first embodiment;
Fig. 5 is an explanatory view showing a state where comparison information responsive to progress of a step of manufacturing the vehicle is used;
Fig. 6 is an explanatory view showing the configuration of a system according to a second embodiment;
Fig. 7 is a flowchart showing a substance of vehicle location information acquisition according to the second embodiment;
Fig. 8 is an explanatory view showing the configuration of a system according to a third embodiment; and
Fig. 9 is a flowchart showing a substance of a running control process according to the third embodiment.

### DETAILED DESCRIPTION

### A. First Embodiment

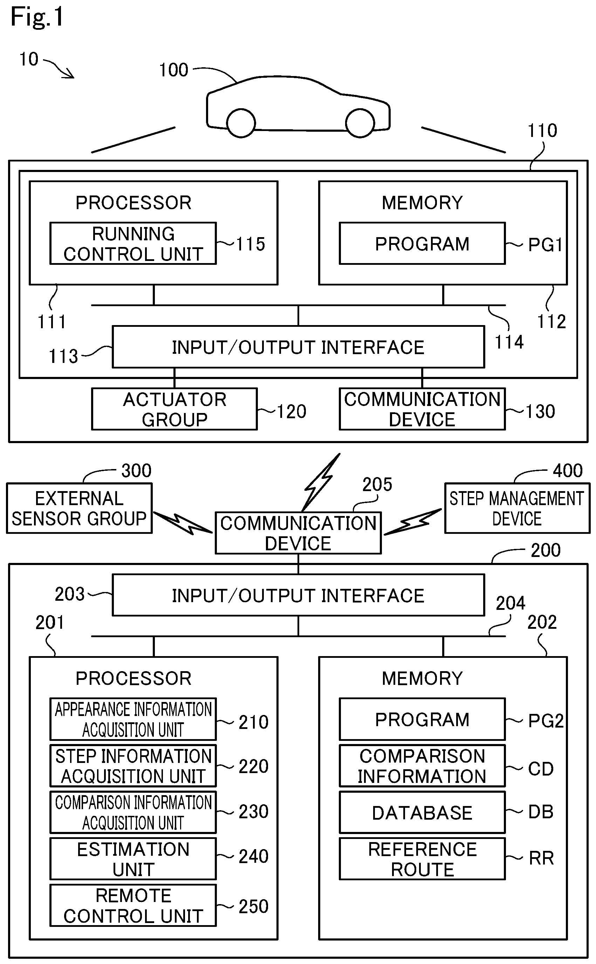

Fig. 1 is an explanatory view showing the configuration of a system 10 according to a first embodiment. In a factory for manufacture of a moving object, the system 10 is used for moving the moving object by unmanned driving.

In the present disclosure, a "moving object" means a movable object, and is a vehicle or an electric vertical takeoff and landing aircraft (so-called flying-automobile), for example. The vehicle may be a vehicle to run with a wheel or a vehicle to run with a caterpillar track, and is a passenger car, a truck, a bus, a two-wheel vehicle, a four-wheel vehicle, a combat vehicle, or a vehicle for construction, for example. The vehicle includes a battery electric vehicle (BEV), a gasoline automobile, a hybrid automobile, and a fuel cell automobile. If the moving object is other than the vehicle. the expressions "vehicle" and "car" in the present disclosure are each replaceable with a "moving object" as appropriate, and the expression "running" is replaceable with a "moving" as appropriate.

"Unmanned driving" means driving independent of running operation by a passenger. The running operation means operation relating to at least one of "run," "turn," and "stop" of the vehicle. The unmanned driving is realized by automatic or manual remote control using a device located outside the vehicle or by autonomous control by the vehicle. A passenger not involved in the running operation may be on-board the vehicle running by the unmanned driving. The passenger not involved in the running operation includes a person simply sitting in a seat of the vehicle and a person doing work such as assembly, inspection, or operation of switches different from the running operation while being on-board the vehicle, for example. Driving by the running operation by the passenger may be called "manned driving."

In the present disclosure, the "remote control" includes "complete remote control" by which all motions of the vehicle are completely determined from outside the vehicle, and "partial remote control" by which some of the motions of the vehicle are determined from outside the vehicle. The "autonomous control" includes "complete autonomous control" by which the vehicle controls its motion autonomously without receiving any information from a device outside the vehicle, and "partial autonomous control" by which the vehicle controls its motion autonomously using information received from a device outside the vehicle.

The system 10 includes a vehicle 100 movable by remote control, a server 200 that controls the vehicle 100 remotely, an external sensor group 300 installed in the factory, and a step management device 400 that manages manufacture of the vehicle 100 in the factory.

The vehicle 100 includes a vehicle controller 110 for controlling each part of the vehicle 100, an actuator group 120 to be driven under control by the vehicle controller 110, and a communication device 130 for communicating with the server 200 via radio communication. The actuator group 120 includes at least one actuator. In the present embodiment, the actuator group 120 includes an actuator of a driving device for accelerating the vehicle 100, an actuator of a steering device for changing a traveling direction of the vehicle 100, and an actuator of a braking device for decelerating the vehicle 100. The driving device includes a battery, a motor for running to be driven by power from the battery, and a drive wheel to be rotated by the motor for running. The actuator of the driving device includes the motor for running.

The vehicle controller 110 is configured using a computer including a processor 111, a memory 112, an input/output interface 113, and an internal bus 114. The processor 111, the memory 112, and the input/output interface 113 are connected to each other via the internal bus 114 in a manner allowing bidirectional communication therebetween. The actuator group 120 and the communication device 130 are connected to the input/output interface 113.

The processor 111 executes a computer program PG1 stored in advance in the memory 112 to function as a running control unit 115. The running control unit 115 controls the actuator group 120. While a passenger is on the vehicle 100, the running control unit 115 controls the actuator group 120 in response to operation by the passenger, thereby allowing the vehicle 100 to run. Independently of whether a passenger is on the vehicle 100, the running control unit 115 allows the vehicle 100 to run by controlling the actuator group 120 in response to a running control signal received from the server 200.

The server 200 is configured using a computer including a processor 201, a memory 202, an input/output interface 203, and an internal bus 204. The processor 201, the memory 202, and the input/output interface 203 are connected to each other via the internal bus 204 in a manner allowing bidirectional communication therebetween. A communication device 205 for communicating with the vehicle 100 via radio communication is connected to the input/output interface 203. In the present embodiment, the communication device 205 is capable of communicating with the external sensor group 300 and the step management device 400 via wire communication or radio communication.

The processor 201 executes a computer program PG2 stored in advance in the memory 202 to function as an appearance information acquisition unit 210, a step information acquisition unit 220, a comparison information acquisition unit 230, an estimation unit 240, and a remote control unit 250. The appearance information acquisition unit 210 acquires appearance information from the external sensor group 300. The appearance information contains information about the appearance of the vehicle 100 detected by the external sensor group 300. The step information acquisition unit 220 acquires step information about progress of a step of manufacturing the vehicle 100, namely, about a stage to which the step of manufacturing the vehicle 100 has developed. In the present embodiment, the step information acquisition unit 220 acquires the step information from the step management device 400. The comparison information acquisition unit 230 acquires comparison information CD representing the appearance of the vehicle 100 responsive to the step information. In the present embodiment, the memory 202 contains two or more pieces of the comparison information CD stored in advance. The comparison information acquisition unit 230 acquires the comparison information CD responsive to the step information from the two or more pieces of comparison information CD stored in the memory 202. Each piece of the comparison information CD is generated using CAD data about the vehicle 100, for example. The estimation unit 240 makes a comparison between the appearance information and the comparison information CD, thereby estimating the location and position of the vehicle 100. The location of the vehicle 100 in the factory is represented using X, Y, and Z location coordinates in a global coordinate system of the factory. The position of the vehicle 100 in the factory is represented by a position relative to the global coordinate system. The remote control unit 250 controls the vehicle 100 remotely on the basis of the location and position of the vehicle 100 estimated by the estimation unit 240.

The external sensor group 300 is composed of at least one external sensor. The external sensor means a sensor installed outside the vehicle 100. In the present embodiment, the external sensor is installed in the factory. The external sensor is a ranging unit. More specifically, the external sensor is a LiDAR. The external sensor includes a communication device not shown in the drawings, and is capable of communicating with the server 200 via wire communication or radio communication.

The step management device 400 manages the step of manufacturing the vehicle 100 entirely in the factory. The step management device 400 is configured using at least one computer. The step management device 400 includes a communication device not shown in the drawings, and is capable of communicating with the server 200 and each type of equipment in the factory via wire communication or radio communication. The step management device 400 collects information from each type of equipment in the factory to generate the step information.

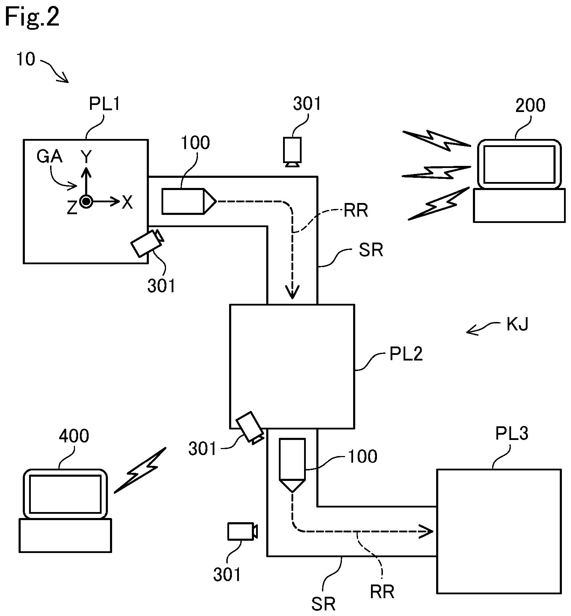

Fig. 2 is an explanatory view showing a state where the vehicle 100 moves by remote control in a factory KJ. In Fig. 2, the vehicle 100 is illustrated schematically. Fig. 2 shows a global coordinate system GA of the factory KJ. In the present embodiment, the factory KJ has a first place PL1, a second place PL2, and a third place PL3. The first place PL1, the second place PL2, and the third place PL3 are connected to each other via a track SR allowing the vehicle 100 to run therethrough. A plurality of external sensors 301 is installed around the track SR. Each of the external sensors 301 belongs to the external sensor group 300.

In the present embodiment, the first place PL1, the second place PL2, and the third place PL3 are places for assembly of the vehicle 100. When the vehicle 100 is assembled in the first place PL1, the vehicle 100 is mounted at least with the vehicle controller 110, the actuator group 120, and the communication device 130. Thus, when the vehicle 100 is assembled in the first place PL1, the vehicle 100 is in a state capable of running by remote control, in other words, a state capable of fulling the three functions including "run," "turn," and "stop" by remote control.

The vehicle 100 having been assembled in the first place PL1 is controlled remotely by the server 200, thereby moving from the first place PL1 to the second place PL2. In the second place PL2, some of body parts, a seat, and others are mounted on the vehicle 100. Mounting the body parts, the seat, and others on the vehicle 100 changes the appearance of the vehicle 100. The vehicle 100 having been assembled in the second place PL2 is controlled remotely by the server 200, thereby moving from the second place PL2 to the third place PL3. In the third place PL3, remaining parts are mounted on the vehicle 100. Mounting the remaining parts on the vehicle 100 changes the appearance of the vehicle 100. Next, the vehicle 100 is subjected to an inspection step and others, and then shipped from the factory KJ. In the following description, the step of assembling the vehicle 100 in the first place PL1 will be called a first assembling step, the step of assembling the vehicle 100 in the second place PL2 will be called a second assembling step, and the step of assembling the vehicle 100 in the third place PL3 will be called a third assembling step. In another case, the vehicle 100 may be shipped from the factory KJ without being mounted with parts other than the vehicle controller 110, the actuator group 120, and the communication device 130, and then the other parts to be mounted may be mounted on the vehicle 100.

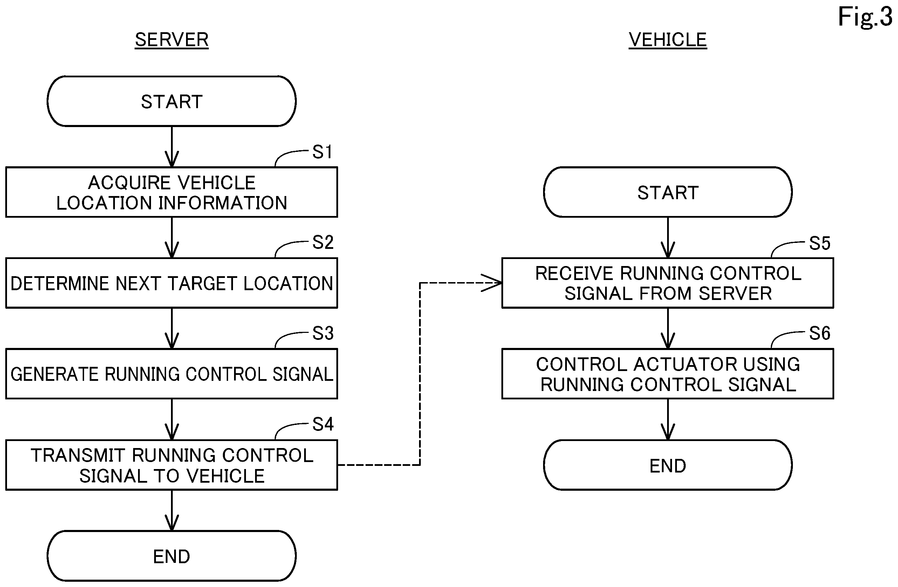

Fig. 3 is a flowchart showing a substance of a running control process. Steps from step S1 to step S4 of the running control process are performed by the processor 201 of the server 200. Steps from step S5 to step S6 of the running control process are performed by the processor 111 of the vehicle controller 110. The running control process is performed repeatedly in a predetermined cycle until the vehicle 100 as a target of remote control arrives at a destination. In the following description, the vehicle 100 as a target of remote control may be called a target vehicle 100. The running control process is started in response to operation on a predetermined start button by a worker at the factory KJ, for example. Before start of the running control process, the server 200 acquires an identification number of the target vehicle 100. As an example, a two-dimensional code containing the identification number of the target vehicle 100 is applied to the target vehicle 100. If the worker at the factory KJ reads the two-dimensional code applied to the target vehicle 100 using a reader, the identification number of the target vehicle 100 is transmitted from the reader to the server 200.

In step S1, the server 200 acquires vehicle location information about the vehicle 100 using detection result output from the external sensor 301 as a sensor located outside the vehicle 100. The vehicle location information is location information to be used as a basis in generating a running control signal. In the present embodiment, the vehicle location information contains the location and position of the vehicle 100 in a reference coordinate system of the factory KJ. In the present embodiment, the reference coordinate system of the factory KJ is a global coordinate system and an arbitrary location in the factory KJ is expressed by X, Y, and Z coordinates in the global coordinate system. Step S1 will be described later in detail.

In step S2, the server 200 determines a target location to which the vehicle 100 is to move next. In the present embodiment, the target location is expressed by X, Y, and Z coordinates in the global coordinate system. The memory 202 of the server 200 contains a reference route RR stored in advance as a route along which the vehicle 100 is to run. The route is expressed by a node indicating a departure place, a node indicating a way point, a node indicating a destination, and a link connecting nodes to each other. The server 200 determines the target location to which the vehicle 100 is to move next using the vehicle location information and the reference route RR. The server 200 determines the target location on the reference route RR ahead of a current location of the vehicle 100.

In step S3, the server 200 generates a running control signal for causing the vehicle 100 to run toward the determined target location. In the present embodiment, the running control signal includes an acceleration and a steering angle of the vehicle 100 as parameters. The server 200 calculates a running speed of the vehicle 100 from transition of the location of the vehicle 100 and makes comparison between the calculated running speed and a target speed of the vehicle 100 determined in advance. If the running speed is lower than the target speed, the server 200 generally determines an acceleration in such a manner as to accelerate the vehicle 100. If the running speed is higher than the target speed as, the server 200 generally determines an acceleration in such a manner as to decelerate the vehicle 100. If the vehicle 100 is on the reference route RR, server 200 determines a steering angle and an acceleration in such a manner as to prevent the vehicle 100 from deviating from the reference route RR. If the vehicle 100 is not on the reference route RR, in other words, if the vehicle 100 deviates from the reference route RR, the server 200 determines a steering angle and an acceleration in such a manner as to return the vehicle 100 to the reference route RR.

In step S4, the server 200 transmits the generated running control signal to the vehicle 100. The server 200 repeats the acquisition of vehicle location information, the determination of a target location, the generation of a running control signal, the transmission of the running control signal, and others in a predetermined cycle.

In step S5, the vehicle controller 110 of the vehicle 100 receives the running control signal transmitted from the server 200. In step S6, the vehicle controller 110 controls the actuator group 120 of the vehicle 100 using the received running control signal, thereby causing the vehicle 100 to run at the acceleration and the steering angle indicated by the running control signal. The vehicle controller 110 repeats the reception of a running control signal and the control over the actuator group 120 in a predetermined cycle.

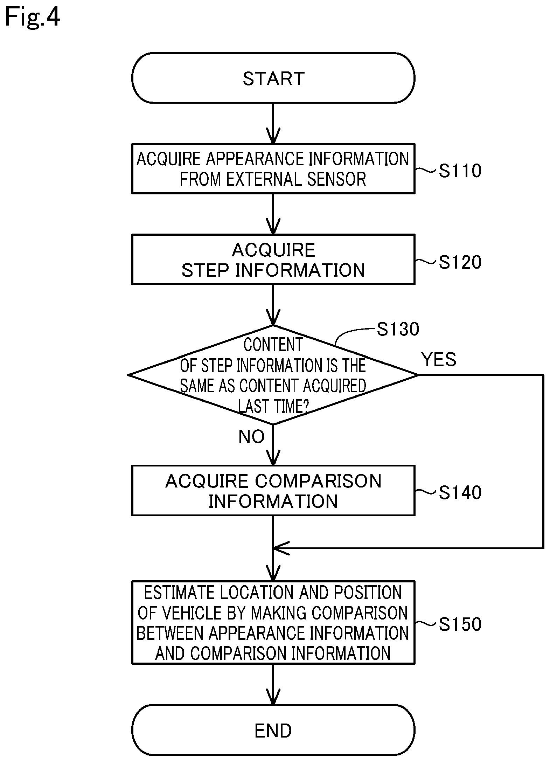

Fig. 4 is a flowchart showing a substance of a vehicle location information acquiring process. In the present embodiment, the vehicle location information acquiring process is performed repeatedly by the processor 201 of the server 200 during implementation of the running control process shown in Fig. 3. When the vehicle location information acquiring process is started, the appearance information acquisition unit 210 first acquires appearance information from the external sensor 301 in step S110. In the present embodiment, the appearance information is three-dimensional point cloud data. The appearance information contains point cloud data about the target vehicle 100 and point cloud data about an object other than the target vehicle 100 such as each type of equipment in the factory KJ or a road surface of the track SR.

In step S120, the step information acquisition unit 220 acquires step information from the step management device 400. The step information represents current progress of a step of manufacturing the target vehicle 100. The step management device 400 has a database containing association between an identification number of each vehicle 100 being manufactured in the factory KJ and progress of the step of manufacturing each vehicle 100. Using the identification number of the target vehicle 100 acquired at the start of the running control process, the step information acquisition unit 220 acquires step information about progress of the step of manufacturing the target vehicle 100 from the database in the step management device 400.

In step S130, the comparison information acquisition unit 230 judges whether a content of the latest step information acquired by the step information acquisition unit 220 is the same as a content of step information acquired last time. If progress of the step of manufacturing the target vehicle 100 represented by the latest step information acquired currently is a stage after finish of the first assembling step and before start of the second assembling step and if progress of the step of manufacturing the target vehicle 100 represented by the step information acquired last time is a stage after finish of the first assembling step and before start of the second assembling step, for example, the comparison information acquisition unit 230 judges that the content of the latest step information is the same as the content of the step information acquired last time. If it is not judged in step S130 that the content of the latest step information is the same as the content of the step information acquired last time, the comparison information acquisition unit 230 proceeds to step S140. If step information about the target vehicle 100 is acquired for the first time, the comparison information acquisition unit 230 skips step S130 and proceeds to step S140.

In step S140, the comparison information acquisition unit 230 acquires the comparison information CD representing the appearance of the vehicle 100 responsive to the progress of the step of manufacturing the target vehicle 100 from the two or more pieces of comparison information CD stored in advance in the memory 202. In the present embodiment, the two or more pieces of comparison information CD includes first comparison information CD1 and second comparison information CD2. The first comparison information CD1 represents the appearance of the vehicle 100 determined from the first assembling step to the second assembling step. The second comparison information CD2 represents the appearance of the vehicle 100 determined from the second assembling step to the third assembling step. In the following description, if the first comparison information CD1 and the second comparison information CD2 are not to be distinguished from each other particularly, they will simply be called the comparison information CD. In the present embodiment, the memory 202 has a database DB stored in advance containing association between progress of the step of manufacturing the vehicle 100 and the comparison information CD to be used in matching corresponding to this progress of the manufacturing step. The comparison information acquisition unit 230 refers to the database DB to acquire the comparison information CD representing the appearance of the vehicle 100 responsive to the progress of the step of manufacturing the target vehicle 100. In the present disclosure, the comparison information CD to be used in matching is the comparison information CD suitable for estimating the location and position of the vehicle 100 correctly through the matching.

In step S150, the estimation unit 240 makes a comparison between the appearance information and the comparison information CD, thereby estimating the location and position of the target vehicle 100. The estimation unit 240 acquires vehicle location information through the estimation of the location and position of the target vehicle 100. In the present embodiment, the appearance information contains point cloud data acquired from the external sensor 301, and the comparison information CD contains point cloud data generated, for example, from CAD data about the target vehicle 100. The estimation unit 240 makes a match between the point cloud data in the appearance information and the point cloud data in the comparison information CD, thereby detecting point cloud data about the target vehicle 100 from the point cloud data in the appearance information and estimating the location and position of the target vehicle 100 on the basis of result of the matching. More specifically, the estimation unit 240 makes the match to detect a point cloud of the target vehicle 100 from a point cloud acquired by the external sensor 301. The result of the matching allows the estimation unit 240 to grasp the location and position of the target vehicle 100 in a local coordinate system of the external sensor 301. The external sensor 301 is fixed at the factory KJ, so that a location relationship between the local coordinate system of the external sensor 301 and the global coordinate system GA of the factory KJ becomes known. This allows the estimation unit 240 to estimate the location and position of the target vehicle 100 in the global coordinate system GA of the factory KJ through making of the match. The match may be made using a technique such as normal distributions transform (NDT) or iterative closest point (ICP), for example.

If it is judged in step S130 that the content of the latest step information is the same as the content of the step information acquired last time, the comparison information acquisition unit 230 skips step S140 and proceeds to step S150. Specifically, if the content of the step information acquired currently by the step information acquisition unit 220 is the same as the content of the step information acquired last time, the comparison information acquisition unit 230 does not acquire the comparison information CD responsive to the step information acquired currently. In this case, in step S150, the estimation unit 240 makes a comparison between the comparison information CD same as that used in a comparison made last time and the appearance information acquired currently. After step S150, the processor 201 finishes the vehicle location information acquiring process and proceeds to step S2 shown in Fig. 3. The method implemented in the vehicle location information acquiring process may also be called a vehicle location information acquiring method.

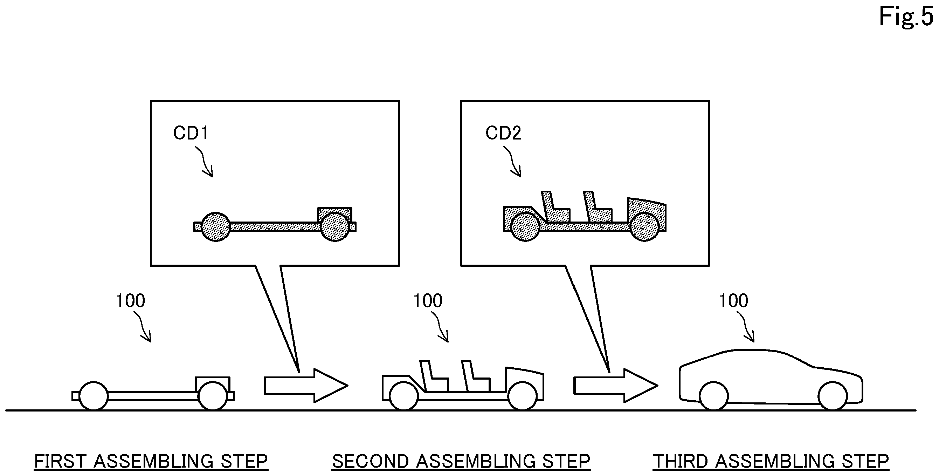

Fig. 5 is an explanatory view showing a state where the comparison information CD responsive to progress of the step of manufacturing the vehicle 100 is used. The appearance of the vehicle 100 changes in response to progress of the step of manufacturing the vehicle 100. Hence, using the same comparison information CD in estimating the location and position of the vehicle 100 without considering progress of the manufacturing step might cause deviation between the actual appearance of the vehicle 100 and the appearance of the vehicle 100 represented by the comparison information CD. The occurrence of the deviation between the actual appearance of the vehicle 100 and the appearance of the vehicle 100 represented by the comparison information CD makes it difficult to estimate the location and position of the vehicle 100 with high accuracy. In the present embodiment, the comparison information CD representing the appearance of the vehicle 100 responsive to progress of the step of manufacturing the vehicle 100 is used in estimating the location and position of the vehicle 100. For example, the first comparison information CD1 representing the appearance of the vehicle 100 determined from the first assembling step to the second assembling step is used from the first assembling step to the second assembling step, and the second comparison information CD2 representing the appearance of the vehicle 100 determined from the second assembling step to the third assembling step is used from the second assembling step to the third assembling step. Thus, it is possible to reduce the occurrence of the deviation between the actual appearance of the vehicle 100 and the appearance of the vehicle 100 represented by the comparison information CD.

According to the system 10 of the present embodiment described above, the occurrence of the deviation is reduced between the actual appearance of the vehicle 100 and the appearance of the vehicle 100 represented by the comparison information CD, making it possible to estimate the location and position of the vehicle 100 correctly. In particular, in causing the vehicle 100 to run by remote control while the vehicle 100 is being manufactured, the appearance of the vehicle 100 changes as the step of manufacturing the vehicle 100 as a target of the remote control proceeds further. In the present embodiment, the server 200 switches the comparison information CD to be used in matching in response to progress of the manufacturing step, making it possible to reduce failure in estimating the location and position of the vehicle 100 correctly as a target of the remote control.

In the present embodiment, the step information acquisition unit 220 of the server 200 acquires step information from the step management device 400. This allows the step information to be acquired easily.

In the present embodiment, if a content of step information acquired currently is the same as a content of step information acquired last time, the comparison information acquisition unit 230 of the server 200 does not acquire the comparison information CD newly. If the comparison information CD is not acquired newly, the estimation unit 240 makes a match between the comparison information CD acquired last time and appearance information acquired currently. This makes it possible to eliminate the burden of acquiring the comparison information CD newly, thereby achieving reduction in the processing burden of acquiring the comparison information CD.

In the present embodiment, the comparison information acquisition unit 230 of the server 200 refers to the database DB stored in advance in the memory 202 to select the comparison information CD to be used in matching from two or more pieces of the comparison information CD. Thus, it is possible to select the comparison information CD suitable for estimating the location and position of the vehicle 100 correctly.

### B. Second Embodiment

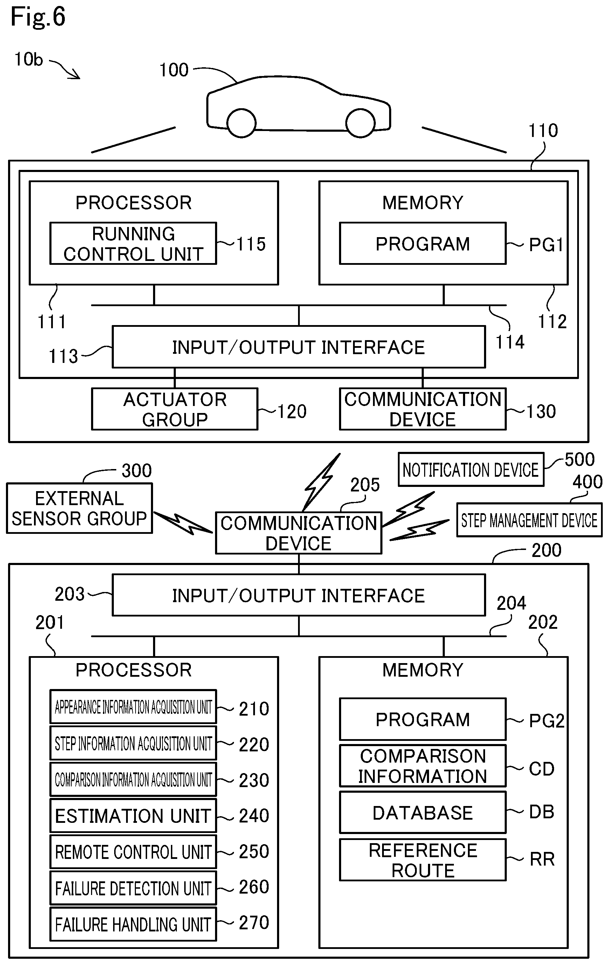

Fig. 6 is an explanatory view showing the configuration of a system 10b according to a second embodiment. The system 10b of the present embodiment differs from that of the first embodiment in that the system 10b includes a notification device 500, and the server 200 includes a failure detection unit 260 and a failure handling unit 270. Unless otherwise stated specifically, the other configuration of the system 10b is the same as that of the first embodiment.

In the present embodiment, the processor 201 of the server 200 executes the computer program PG2 stored in advance in the memory 202 to function as the appearance information acquisition unit 210, the step information acquisition unit 220, the comparison information acquisition unit 230, the estimation unit 240, and the remote control unit 250, and to further function as the failure detection unit 260 and the failure handling unit 270. The failure detection unit 260 detects the occurrence of mounting failure of a part at the vehicle 100. If the failure detection unit 260 detects mounting failure, the failure handling unit 270 performs a process of stopping running of the vehicle 100 and a process of causing the notification device 500 to notify the occurrence of the mounting failure at the vehicle 100.

The notification device 500 is a device for notifying an administrator of the system 10b or a worker at the factory KJ of the occurrence of the mounting failure at the vehicle 100. For example, the notification device 500 is a warning buzzer provided at the factory KJ or a warning lamp provided at the factory KJ. The notification device 500 may be a tablet terminal carried by the administrator of the system 10b or the worker at the factory KJ. In the following description, the administrator of the system 10b and the worker at the factory KJ will be called administrators. The notification device 500 includes a communication device not shown in the drawings, and is capable of communicating with the server 200 via wire communication or radio communication.

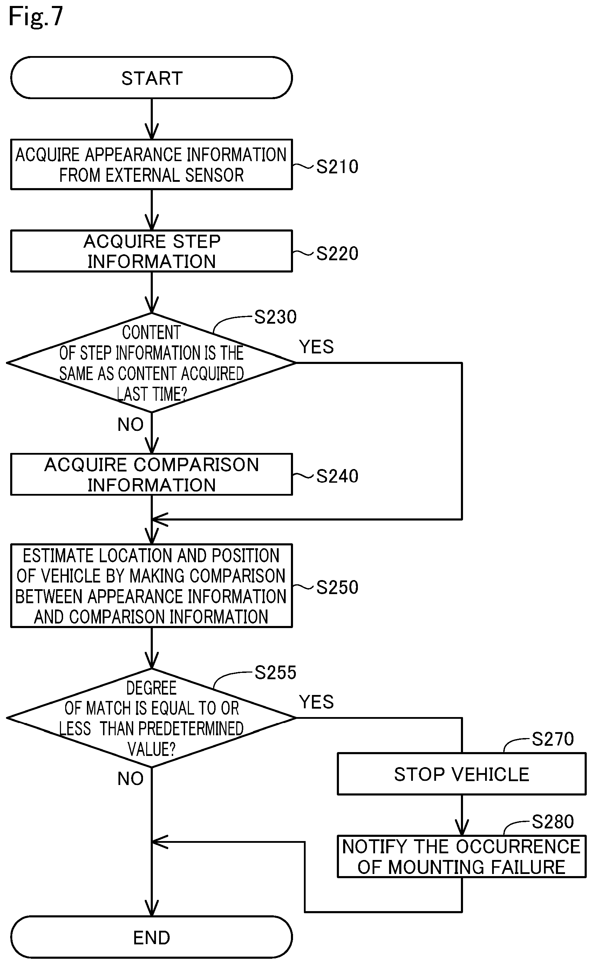

Fig. 7 is a flowchart showing a substance of a location information acquiring process according to the present embodiment. Steps from step S210 to step S250 are the same as the steps from step S110 to step S150 of the location information acquiring process of the first embodiment shown in Fig. 4. After step S250, the failure detection unit 260 judges in step S255 whether a degree of match between the appearance of the vehicle 100 contained in appearance information and the appearance of the vehicle 100 contained in the comparison information CD is equal to or less than a predetermined value. A degree of match between the appearances becomes higher as a total distance becomes shorter that is obtained by adding distances each defined between a point in point cloud data in the appearance information and a corresponding point in point cloud data in the comparison information CD. Thus, if the total distance of the distances each defined between the corresponding points is equal to or greater than a predetermined distance, the failure detection unit 260 judges that a degree of match between the appearance of the vehicle 100 contained in the appearance information and the appearance of the vehicle 100 contained in the comparison information CD is equal to or less than the predetermined value.

If it is not judged in step S255 that a degree of match between the appearance of the vehicle 100 contained in the appearance information and the appearance of the vehicle 100 contained in the comparison information CD is equal to or less than the predetermined value, the server 200 finishes the location information acquiring process and proceeds to step S2 of the running control process shown in Fig. 3.

If it is judged in step S255 that a degree of match between the appearance of the vehicle 100 contained in the appearance information and the appearance of the vehicle 100 contained in the comparison information CD is equal to or less than the predetermined value, the failure handling unit 270 stops running of the vehicle 100 in step S270 and notifies the occurrence of mounting failure of a part at the vehicle 100 in step S280. In the present embodiment, the failure handling unit 270 generates a running control signal for stopping running of the vehicle 100 and transmits the running control signal to the vehicle 100 via the communication device 205, thereby stopping running of the vehicle 100. The failure handling unit 270 generates a notification signal for notifying the mounting failure and transmits the notification signal to the notification device 500 via the communication device 205, thereby notifying the occurrence of the mounting failure. As an example, if the notification device 500 is a warning buzzer, the notification signal is a signal for sounding the warning buzzer. If the notification device 500 is a warning lamp, the notification signal is a signal for lighting the warning lamp. If the notification device 500 is a tablet terminal, the notification signal is a signal for displaying a message on the tablet terminal notifying the occurrence of the mounting failure of the part at the vehicle 100. Then, the server 200 finishes the location information acquiring process and stops the running control process shown in Fig. 3.

According to the system 10b of the present embodiment described above, it is possible to detect the occurrence of mounting failure of a part at the vehicle 100 using the failure detection unit 260. Furthermore, in the present embodiment, if the failure detection unit 260 detects the occurrence of mounting failure of a part at the vehicle 100, the failure handling unit 270 performs the process of stopping running of the vehicle 100. This makes it possible to prevent the vehicle 100 from running continuously while the mounting failure is left unsolved. Furthermore, in the present embodiment, if the failure detection unit 260 detects the occurrence of mounting failure of a part at the vehicle 100, the failure handling unit 270 performs the process of notifying the occurrence of the mounting failure of the part at the vehicle 100. This allows the administrators to recognize the occurrence of the mounting failure at an early stage and to take countermeasures.

### C. Third Embodiment

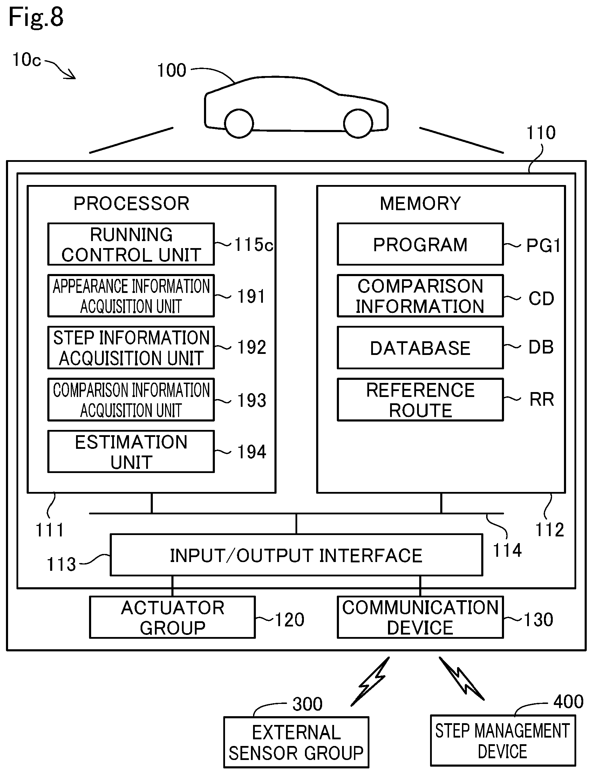

Fig. 8 is an explanatory view schematically showing the configuration of a system 10c according to a third embodiment. The third embodiment differs from the first embodiment in that the system 10c does not include the server 200 and the vehicle 100 runs by autonomous control instead of remote control. Unless otherwise stated specifically, the other configuration of the system 10c is the same as that of the first embodiment.

In the present embodiment, the vehicle 100 is configured to be capable of running by autonomous control. The vehicle 100 is capable of communicating with the external sensor group 300 and the step management device 400 via radio communication using the communication device 130. In the present embodiment, the processor 111 of the vehicle controller 110 executes the computer program PG1 stored in advance in the memory 112 to function as a running control unit 115c, an appearance information acquisition unit 191, a step information acquisition unit 192, a comparison information acquisition unit 193, and an estimation unit 194. In the present embodiment, the running control unit 115c generates a running control signal by itself and controls the actuator group 120 using the generated running control signal, thereby causing the own vehicle to run. The appearance information acquisition unit 191 acquires appearance information about the own vehicle from the external sensor group 300. The step information acquisition unit 192 acquires step information about progress of a step of manufacturing the own vehicle. The comparison information acquisition unit 193 acquires the comparison information CD representing the appearance of the own vehicle responsive to the step information. In the present embodiment, the memory 112 contains two or more pieces of the comparison information CD stored in advance in the memory 112. The comparison information acquisition unit 193 acquires the comparison information CD responsive to the step information from the two or more pieces of comparison information CD stored in the memory 112. The estimation unit 194 makes a comparison between the appearance information and the comparison information CD, thereby estimating the location and position of the own vehicle. The memory 112 contains the database DB and a reference route RR stored in advance.

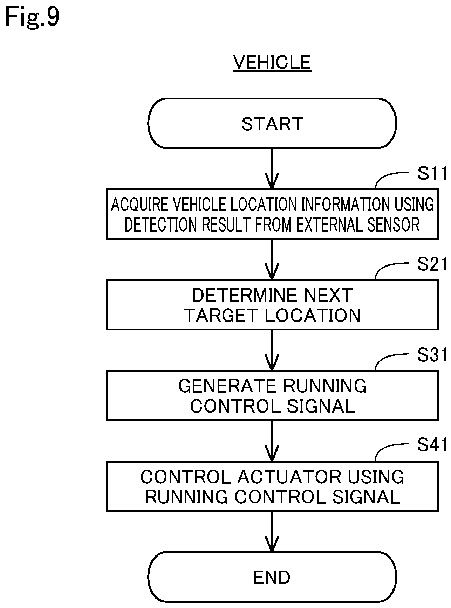

Fig. 9 is a flowchart showing a substance of a running control process according to the third embodiment. In the present embodiment, the running control process is performed by the processor 111 of the vehicle controller 110. In step S11, the vehicle controller 110 performs the vehicle location information acquiring process shown in Fig. 4 to acquire vehicle location information about the own vehicle. More specifically, in step S110, the appearance information acquisition unit 191 acquires appearance information from the external sensor 301. In step S120, the step information acquisition unit 192 acquires step information about progress of a step of manufacturing the own vehicle from the step management device 400. In step S130, the comparison information acquisition unit 193 judges whether a content of the latest step information acquired by the step information acquisition unit 192 is the same as a content of step information acquired last time. If it is not judged in step S130 that the content of the latest step information is the same as the content of the step information acquired last time, the comparison information acquisition unit 193 proceeds to step S140. If it is judged in step S130 that the content of the latest step information is the same as the content of the step information acquired last time, the comparison information acquisition unit 193 skips step S140 and proceeds to step S150. In step S140, the comparison information acquisition unit 193 acquires the comparison information CD representing the appearance of the vehicle 100 responsive to the progress of the step of manufacturing the own vehicle from the two or more pieces of comparison information CD stored in advance in the memory 112. In step S150, the estimation unit 194 makes a comparison between the appearance information and the comparison information CD to estimate the location and position of the own vehicle, thereby acquiring vehicle location information.

In step S21, the running control unit 115c determines a target location to which the own vehicle is to move next. In step S31, the running control unit 115c generates a running control signal for causing the own vehicle to run toward the determined target location. In step S41, the running control unit 115c controls the actuator group 120 using the generated running control signal, thereby causing the own vehicle to run on the basis of a parameter represented by the running control signal. The running control unit 115c repeats acquisition of vehicle location information, determination of a target location, generation of a running control signal, and control over the actuator group 120 in a predetermined cycle.

According to the system 10c of the present embodiment described above, it is possible to cause the vehicle 100 to run by autonomous control by the vehicle 100 without causing the server 200 to control the vehicle 100 remotely.

### D. Other Modifications

In each of the above-described embodiments, the external sensor 301 is a LiDAR and the estimation unit 240, 194 estimates the location and position of the vehicle 100 through point cloud matching using point cloud data output from the LiDAR. By contrast, the external sensor 301 may be a camera. In this case, the estimation unit 240, 194 may estimate the location and position of the vehicle 100 through image matching using an image output from the camera.

In each of the above-described embodiments, the estimation unit 240, 194 estimates the location and position of the vehicle 100. By contrast, the estimation unit 240, 194 may estimate one of the location and position of the vehicle 100 and may not have to estimate the other. If the vehicle 100 is mounted with a GPS receiver, for example, it is possible to acquire location information about the vehicle 100 using the GPS receiver. Thus, the estimation unit 240, 194 may estimate the position of the vehicle 100 without estimating the location of the vehicle 100. If the reference route RR extends in a straight line, for example, the estimation unit 240, 194 may estimate the location of the vehicle 100 without estimating the position of the vehicle 100.

In each of the above-described embodiments, the step information acquisition unit 220, 192 acquires step information from the step management device 400. By contrast, if appearance information acquired from the external sensor 301 contains identification information about the external sensor 301 and the memory 202, 112 has the database DB stored in advance containing association between the identification information about the external sensor 301 and progress of a step of manufacturing the vehicle 100, the step information acquisition unit 220, 192 may acquire the progress of the step of manufacturing the vehicle 100 using the identification information about the external sensor 301 from which the appearance information acquisition unit 210, 191 has acquired the appearance information and using the database DB. Alternatively, if the vehicle 100 is mounted with a GPS receiver and the memory 202, 112 has the database DB stored in advance containing association between location information and progress of the step of manufacturing the vehicle 100, the step information acquisition unit 220, 192 may acquire the progress of the step of manufacturing the vehicle 100 using the location information acquired from the GPS receiver and using the database DB.

In each of the above-described embodiments, the memory 202 of the server 200 or the memory 112 of the vehicle controller 110 has the database DB stored in advance containing association between progress of a step of manufacturing the vehicle 100 and the comparison information CD to be used in matching corresponding to this progress of the manufacturing step. The comparison information acquisition unit 230, 193 refers to the database DB to acquire the comparison information CD representing the appearance of the vehicle 100 responsive to the progress of the step of manufacturing the target vehicle 100. By contrast, the memory 202 of the server 200 or the memory 112 of the vehicle controller 110 may have the database DB stored in advance containing association between identification information about the external sensor 301 and the comparison information CD to be used in matching with appearance information acquired by this external sensor 301. The step information acquisition unit 220, 192 may acquire the identification information about the external sensor 301 as step information from which the appearance information has been acquired. The comparison information acquisition unit 230, 193 may acquire the comparison information CD responsive to the external sensor 301 from which the appearance information has been acquired by the appearance information acquisition unit 210, 191 by referring to the database DB. Even in this case, it is still possible to select the comparison information CD suitable for estimating the location and position of the vehicle 100 correctly.

In each of the above-described embodiments, the comparison information acquisition unit 230, 193 judges in step S130 or step S230 of the vehicle location information acquiring process whether a content of step information acquired currently is the same as a content of step information acquired last time, and skips step S140 or step S240 if the content acquired currently is the same as the content acquired last time. Thus, the comparison information CD is not acquired in step S140 or step S240. By contrast, the comparison information acquisition unit 230, 193 may acquire the comparison information CD in step S140 or step S240 without judging in step S130 or step S230 of the vehicle location information acquiring process whether a content of step information acquired currently is the same as a content of step information acquired last time.

In the above-described third embodiment, the failure detection unit 260 and the failure handling unit 270 shown in Fig. 6 may be provided at the vehicle controller 110. In step S11 of the running control process in Fig. 9, the vehicle controller 110 may perform the vehicle location information acquiring process shown in Fig. 7 instead of the vehicle location information acquiring process shown in Fig. 4. In this case, it is possible to detect the occurrence of mounting failure of a part at the own vehicle using the failure detection unit 260. If the failure detection unit 260 detects the occurrence of mounting failure of a part at the own vehicle, it is possible to perform the process of stopping running of the own vehicle using the failure handling unit 270.

In the above-described first embodiment, the server 200 performs the processing from acquisition of vehicle location information to generation of a running control signal. By contrast, the vehicle 100 may perform at least part of the processing from acquisition of vehicle location information to generation of a running control signal. For example, embodiments (1) to (3) described below are applicable, for example.

(1) The server 200 may acquire vehicle location information, determine a target location to which the vehicle 100 is to move next, and generate a route from a current location of the vehicle 100 indicated by the acquired vehicle location information to the target location. The server 200 may generate a route to the target location between the current location and a destination or generate a route to the destination. The server 200 may transmit the generated route to the vehicle 100. The vehicle 100 may generate a running control signal in such a manner as to cause the vehicle 100 to run along the route received from the server 200 and control an actuator using the generated running control signal.

(2) The server 200 may acquire vehicle location information and transmit the acquired vehicle location information to the vehicle 100. The vehicle 100 may determine a target location to which the vehicle 100 is to move next, generate a route from a current location of the vehicle 100 indicated by the received vehicle location information to the target location, generate a running control signal in such a manner as to cause the vehicle 100 to run along the generated route, and control an actuator using the generated running control signal.

(3) In the foregoing embodiments (1) and (2), an internal sensor may be mounted on the vehicle 100, and detection result output from the internal sensor may be used in at least one of the generation of the route and the generation of the running control signal. The internal sensor is a sensor mounted on the vehicle 100. More specifically, the internal sensor might include a camera, LiDAR, a millimeter wave radar, an ultrasonic wave sensor, a GPS sensor, an acceleration sensor, and a gyroscopic sensor, for example. For example, in the foregoing embodiment (1), the server 200 may acquire detection result from the internal sensor, and in generating the route, may reflect the detection result from the internal sensor in the route. In the foregoing embodiment (1), the vehicle 100 may acquire detection result from the internal sensor, and in generating the running control signal, may reflect the detection result from the internal sensor in the running control signal. In the foregoing embodiment (2), the vehicle 100 may acquire detection result from the internal sensor, and in generating the route, may reflect the detection result from the internal sensor in the route. In the foregoing embodiment (2), the vehicle 100 may acquire detection result from the internal sensor, and in generating the running control signal, may reflect the detection result from the internal sensor in the running control signal.

In the above-described first embodiment, the server 200 automatically generates a running control signal to be transmitted to the vehicle 100. By contrast, the server 200 may generate a running control signal to be transmitted to the vehicle 100 in response to operation by an external operator existing outside the vehicle 100. For example, the external operator may operate an operating device including a display on which a captured image output from the external sensor is displayed, steering, an accelerator pedal, and a brake pedal for operating the vehicle 100 remotely, and a communication device for making communication with the server 200 through wire communication or wireless communication, for example, and the server 200 may generate a running control signal responsive to the operation on the operating device.

In each of the above-described embodiments, the vehicle 100 is simply required to have a configuration to become movable by unmanned driving. The vehicle 100 may embodied as a platform having the following configuration, for example. The vehicle 100 is simply required to include at least actuators and a controller. More specifically, in order to fulfill three functions including "run," "turn," and "stop" by unmanned driving, the actuators may include a driving device, a steering device and a braking device. The actuators are controlled by the controller that controls running of the vehicle 100. In order for the vehicle 100 to acquire information from outside for unmanned driving, the vehicle 100 is simply required to include the communication device further. Specifically, the vehicle 100 to become movable by unmanned driving is not required to be equipped with at least some of interior components such as a driver's seat and a dashboard, is not required to be equipped with at least some of exterior components such as a bumper and a fender or is not required to be equipped with a bodyshell. In such cases, a remaining component such as a bodyshell may be mounted on the vehicle 100 before the vehicle 100 is shipped from the factory KJ, or a remaining component such as a bodyshell may be mounted on the vehicle 100 after the vehicle 100 is shipped from the factory KJ while the remaining component such as a bodyshell is not mounted on the vehicle 100. Each of components may be mounted on the vehicle 100 from any direction such as from above, from below, from the front, from the back, from the right, or from the left. Alternatively, these components may be mounted from the same direction or from respective different directions. The location determination for the platform may be performed in the same way as for the vehicle 100 in the first embodiments.

The vehicle 100 may be manufactured by combining a plurality of modules. The module means a unit composed of one or more components grouped according to a configuration or function of the vehicle 100. For example, a platform of the vehicle 100 may be manufactured by combining a front module, a center module and a rear module. The front module constitutes a front part of the platform, the center module constitutes a center part of the platform, and the rear module constitutes a rear part of the platform. The number of the modules constituting the platform is not limited to three but may be equal to or less than two, or equal to or greater than four. In addition to or instead of the platform, any parts of the vehicle 100 different from the platform may be modularized. Various modules may include an arbitrary exterior component such as a bumper or a grill, or an arbitrary interior component such as a seat or a console. Not only the vehicle 100 but also any types of moving object may be manufactured by combining a plurality of modules. Such a module may be manufactured by joining a plurality of components by welding or using a fixture, for example, or may be manufactured by forming at least part of the module integrally as a single component by casting. A process of forming at least part of a module as a single component is also called Giga-casting or Mega-casting. Giga-casting can form each part conventionally formed by joining multiple parts in a moving object as a single component. The front module, the center module, or the rear module described above may be manufactured using Giga-casting, for example.

A configuration for realizing running of a vehicle by unmanned driving is also called a "Remote Control auto Driving system". Conveying a vehicle using Remote Control Auto Driving system is also called "self-running conveyance". Producing the vehicle using self-running conveyance is also called "self-running production". In self-running production, for example, at least part of the conveyance of vehicles is realized by self-running conveyance in a factory where the vehicle is manufactured.

The control and the method described in the present disclosure may be realized by a dedicated computer provided by configuring a processor and a memory programmed in such a manner as to implement one or a plurality of functions embodied by a computer program. Alternatively, the controller and the method described in the present disclosure may be realized by a dedicated computer provided by configuring a processor using one or more dedicated hardware logic circuits. Still alternatively, the controller and the method described in the present disclosure may be realized by one or more dedicated computers configured using a combination of a processor and a memory programmed in such a manner as to implement one or a plurality of functions, and a processor configured using one or more hardware logic circuits. The computer program may be stored as an instruction to be executed by a computer into a computer-readable tangible non-transitory recording medium.

The technical technical features of any of the above embodiments and their modifications may be replaced or combined appropriately, in order to solve part or all of the problems described above or in order to achieve part or all of the advantageous effects described above. Any of the technical features may be omitted appropriately unless the technical feature is described as essential in the description hereof.

## Claims

1. A system (10; 10b; 10c) comprising:
a sensor (301) configured to acquire an appearance information containing the appearance of a moving object (100) movable by unmanned driving;
a step information acquisition unit (220; 192) configured to acquire a step information about progress of a step of manufacturing the moving object;
a comparison information acquisition unit (230; 193) configured to acquire a comparison information (CD) representing the appearance of the moving object responsive to the step information; and
an estimation unit (240; 194) configured to estimate at least one of the location and position of the moving object by making a comparison between the comparison information and the appearance information.

2. The system according to claim 1, wherein
the sensor acquires the appearance information repeatedly,
the step information acquisition unit acquires the step information repeatedly,
if a content of the step information acquired currently by the step information acquisition unit is the same as a content of the step information acquired last time, the comparison information acquisition unit does not acquire the comparison information responsive to the step information acquired currently, and
the estimation unit makes a comparison between the comparison information same as that used in a comparison made last time and the appearance information.

3. The system according to claim 1, further comprising:
a failure detection unit (260) configured to detect mounting failure of a part at the moving object using a degree of match between the appearance of the moving object represented by the comparison information and the appearance of the moving object contained in the appearance information.

4. The system according to claim 3, further comprising:
a failure handling unit (270) configured to perform at least one of a process of stopping moving of the moving object and a process of notifying the occurrence of the mounting failure if the mounting failure is detected by the failure detection unit.

5. The system according to claim 1, further comprising:
a database (DB) containing association between the step information and the comparison information, wherein
the comparison information acquisition unit acquires the comparison information that is associated in the database with the step information acquired by the step information acquisition unit.

6. The system according to claim 1, further comprising:
a step management device (400) configured to manage manufacture of the moving object, wherein
the step information acquisition unit acquires the step information from the step management device.

7. The system according to claim 1, further comprising:
a plurality of the sensors; and
a database (DB) containing association between identification information about each of the sensors and the comparison information, wherein
the step information acquisition unit acquires the identification information about the sensor as the step information by which the appearance information has been acquired, and
the comparison information acquisition unit acquires the comparison information that is associated in the database with the identification information about the sensor by which the appearance information has been acquired.

8. A device (200; 110) comprising:
an appearance information acquisition unit (210; 191) configured to acquire an appearance information from a sensor (301), the appearance information being acquired by the sensor and containing the appearance of a moving object (100) movable by unmanned driving;
a step information acquisition unit (220; 192) configured to acquire a step information about progress of a step of manufacturing the moving object;
a comparison information acquisition unit (230; 193) configured to acquire a comparison information representing the appearance of the moving object responsive to the step information; and
an estimation unit (240; 194) configured to estimate at least one of the location and position of the moving object by making a comparison between the comparison information and the appearance information.

9. A method comprising:
acquiring an appearance information containing the appearance of a moving object (100) movable by unmanned driving;
acquiring a step information about progress of a step of manufacturing the moving object;
acquiring a comparison information (CD) representing the appearance of the moving object responsive to the step information; and
estimating at least one of the location and position of the moving object by making a comparison between the comparison information and the appearance information.

## Patentansprüche

1. System (10; 10b; 10c), das umfasst:
einen Sensor (301), der so konfiguriert ist, dass er Erscheinungsbildinformationen erfasst, die das Erscheinungsbild eines sich bewegenden Objekts (100) enthalten, das durch unbemanntes Fahren beweglich ist;
eine Schrittinformations-Erfassungseinheit (220; 192), die so konfiguriert ist, dass sie Schrittinformationen über den Fortschritt eines Schritts der Herstellung des sich bewegenden Objekts erfasst;
eine Vergleichsinformations-Erfassungseinheit (230; 193), die dafür konfiguriert ist, Vergleichsinformationen (CD) zu erfassen, die das Aussehen des sich bewegenden Objekts als Reaktion auf die Schrittinformationen darstellen; und
eine Schätzungseinheit (240; 194), die so konfiguriert ist, dass sie den Ort und/oder die Position des sich bewegenden Objekts schätzt, indem sie einen Vergleich zwischen den Vergleichsinformationen und den Erscheinungsbildinformationen durchführt.

2. System nach Anspruch 1, wobei
der Sensor die Erscheinungsbildinformationen wiederholt erfasst,
die Schrittinformations-Erfassungseinheit die Schrittinformationen wiederholt erfasst,
wenn ein Inhalt der gegenwärtig von der Schrittinformations-Erfassungseinheit erfassten Schrittinformationen derselbe ist wie ein Inhalt der zuletzt erfassten Schrittinformationen, die Vergleichsinformations-Erfassungseinheit die Vergleichsinformationen als Reaktion auf die gegenwärtig erfassten Schrittinformationen nicht erfasst, und
die Schätzungseinheit einen Vergleich zwischen den Vergleichsinformationen, die dieselben sind wie die, die bei einem zuletzt durchgeführten Vergleich verwendet wurden, und den Erscheinungsbildinformationen durchführt.

3. System nach Anspruch 1, das ferner umfasst:
eine Fehlererfassungseinheit (260), die so konfiguriert ist, dass sie einen Montagefehler eines Teils an dem sich bewegenden Objekt erfasst unter Verwendung eines Übereinstimmungsgrades zwischen dem Aussehen des sich bewegenden Objekts, das durch die Vergleichsinformationen dargestellt wird, und dem Aussehen des sich bewegenden Objekts, das in den Erscheinungsbildinformationen enthalten ist.

4. System nach Anspruch 3, das ferner umfasst:
eine Fehlerbehandlungseinheit (270), die so konfiguriert ist, dass sie mindestens einen Prozess des Anhaltens der Bewegung des sich bewegenden Objekts und einen Prozess der Meldung des Auftretens des Montagefehlers durchführt, wenn der Montagefehler von der Fehlererfassungseinheit erfasst wird.

5. System nach Anspruch 1, das ferner umfasst:
eine Datenbank (DB), die eine Zuordnung zwischen den Schrittinformationen und den Vergleichsinformationen enthält, wobei
die Vergleichsinformations-Erfassungseinheit die Vergleichsinformationen erfasst, die in der Datenbank mit den durch die Schrittinformations-Erfassungseinheit erfassten Schrittinformationen verknüpft sind.

6. System nach Anspruch 1, das ferner umfasst:
eine Schrittverwaltungsvorrichtung (400), die dafür konfiguriert ist, die Herstellung des sich bewegenden Objekts zu verwalten, wobei
die Schrittinformations-Erfassungseinheit die Schrittinformationen von der Schrittverwaltungsvorrichtung erwirbt.

7. System nach Anspruch 1, das ferner umfasst:
eine Vielzahl von Sensoren; und
eine Datenbank (DB), die eine Zuordnung zwischen Identifikationsinformationen über jeden der Sensoren und den Vergleichsinformationen enthält, wobei
die Schrittinformations-Erfassungseinheit die Identifikationsinformationen über den Sensor als die Schrittinformationen erfasst, durch die die Erscheinungsinformationen erfasst wurden, und
die Vergleichsinformations-Erfassungseinheit die Vergleichsinformationen erfasst, die in der Datenbank mit den Identifikationsinformationen über den Sensor, durch den die Erscheinungsinformationen erfasst wurden, verknüpft sind.

8. Vorrichtung (200; 110), die umfasst:
eine Erscheinungsbildinformations-Erfassungseinheit (210; 191), die dafür konfiguriert ist, Erscheinungsbild-Informationen von einem Sensor (301) zu erfassen, wobei die Erscheinungsbild-Informationen von dem Sensor erfasst werden und das Erscheinungsbild eines sich bewegenden Objekts (100) enthalten, das durch unbemanntes Fahren beweglich ist;
eine Schrittinformations-Erfassungseinheit (220; 192), die so konfiguriert ist, dass sie Schrittinformationen über den Fortschritt eines Schritts der Herstellung des sich bewegenden Objekts erfasst;
eine Vergleichsinformations-Erfassungseinheit (230; 193), die dafür konfiguriert ist, Vergleichsinformationen zu erfassen, die das Aussehen des sich bewegenden Objekts als Reaktion auf die Schrittinformationen darstellen; und
eine Schätzungseinheit (240; 194), die so konfiguriert ist, dass sie den Ort und/oder die Position des sich bewegenden Objekts schätzt, indem sie einen Vergleich zwischen den Vergleichsinformationen und den Erscheinungsbildinformationen durchführt.

9. Verfahren, das Folgendes umfasst:
Erfassen von Erscheinungsbildinformationen, die das Erscheinungsbild eines sich bewegenden Objekts (100) enthalten, das durch unbemanntes Fahren beweglich ist;
Erfassen von Schrittinformationen über den Fortschritt eines Schritts zur Herstellung des sich bewegenden Objekts;
Erfassen von Vergleichsinformationen (CD), die das Aussehen des sich bewegenden Objekts als Reaktion auf die Schrittinformationen darstellen; und
Schätzen des Ortes und/oder der Position des sich bewegenden Objekts, indem ein Vergleich zwischen den Vergleichsinformationen und den Erscheinungsbildinformationen durchgeführt wird.

## Revendications

1. Système (10 ; 10b ; 10c), comprenant :
un capteur (301) configuré pour acquérir une information d'apparence contenant l'apparence d'un objet mobile (100) pouvant être mû par conduite sans pilote ;
une unité d'acquisition d'information d'étape (220 ; 192) configuré pour acquérir une information d'étape concernant un progrès d'une étape de fabrication de l'objet mobile ;
une unité d'acquisition d'information de comparaison (230 ; 193) configurée pour acquérir une information de comparaison (CD) représentant l'apparence de l'objet mobile en réponse à l'information d'étape ; et
une unité d'estimation (240 ; 194) configurée pour estimer au moins un élément parmi l'emplacement et la position de l'objet mobile en effectuant une comparaison entre l'information de comparaison et l'information d'apparence.

2. Système selon la revendication 1, dans lequel
le capteur acquiert l'information d'apparence de façon répétée,
l'unité d'acquisition d'information d'étape acquiert l'information d'étape de façon répétée,
si un contenu de l'information d'étape acquise actuellement par l'unité d'acquisition d'information d'étape est le même qu'un contenu de l'information d'étape acquise la dernière fois, l'unité d'acquisition d'information de comparaison n'acquiert pas l'information de comparaison en réponse à l'information d'étape acquise actuellement, et
l'unité d'estimation effectue une comparaison entre l'information de comparaison identique à celle utilisée dans une comparaison effectuée la dernière fois et l'information d'apparence.

3. Système selon la revendication 1, comprenant en outre :
une unité de détection de défaillance (260) configurée pour détecter une défaillance de montage d'une pièce sur l'objet mobile en utilisant un degré de coïncidence entre l'apparence de l'objet mobile représenté par l'information de comparaison et l'apparence de l'objet mobile contenu dans l'information d'apparence.

4. Système selon la revendication 3, comprenant en outre :
une unité de traitement de défaillance (270) configurée pour réaliser au moins un processus parmi un processus d'arrêt de mouvement de l'objet mobile et un processus de notification de la survenue de la défaillance de montage si la défaillance de montage est détectée par l'unité de détection de défaillance.

5. Système selon la revendication 1, comprenant en outre :
une base de données (DB) contenant une association entre l'information d'étape et l'information de comparaison, dans lequel
l'unité d'acquisition d'information de comparaison acquiert l'information de comparaison qui est associée, dans la base de données, à l'information d'étape acquise par l'unité d'acquisition d'information d'étape.

6. Système selon la revendication 1, comprenant en outre :
un dispositif de gestion d'étape (400) configuré pour gérer la fabrication de l'objet mobile, dans lequel
l'unité d'acquisition d'information d'étape acquiert l'information d'étape en provenance du dispositif de gestion d'étape.

7. Système selon la revendication 1, comprenant en outre :
une pluralité des capteurs ; et
une base de données (DB) contenant une association entre une information d'identification concernant chacun des capteurs et l'information de comparaison, dans lequel
l'unité d'acquisition d'information d'étape acquiert l'information d'identification concernant le capteur en tant qu'information d'étape, par lequel l'information d'apparence a été acquise, et
l'unité d'acquisition d'information de comparaison acquiert l'information de comparaison qui est associée, dans la base de données, à l'information d'identification concernant le capteur par lequel l'information d'apparence a été acquise.

8. Dispositif (200 ; 110), comprenant :
une unité d'acquisition d'information d'apparence (210 ; 191) configurée pour acquérir une information d'apparence en provenance d'un capteur (301), l'information d'apparence étant acquise par le capteur et contenant l'apparence d'un objet mobile (100) pouvant être mû par conduite sans pilote ;
une unité d'acquisition d'information d'étape (220 ; 192) configurée pour acquérir une information d'étape concernant un progrès d'une étape de fabrication de l'objet mobile ;
une unité d'acquisition d'information de comparaison (230 ; 193) configurée pour acquérir une information de comparaison représentant l'apparence de l'objet mobile en réponse à l'information d'étape ; et
une unité d'estimation (240 ; 194) configurée pour estimer au moins un élément parmi l'emplacement et la position de l'objet mobile en effectuant une comparaison entre l'information de comparaison et l'information d'apparence.

9. Procédé, comprenant :
l'acquisition d'une information d'apparence contenant l'apparence d'un objet mobile (100) pouvant être mû par conduite sans pilote ;
l'acquisition d'une information d'étape concernant un progrès d'une étape de fabrication de l'objet mobile ;
l'acquisition d'une information de comparaison (CD) représentant l'apparence de l'objet mobile en réponse à l'information d'étape ; et
l'estimation d'au moins un élément parmi l'emplacement et la position de l'objet mobile en effectuant une comparaison entre l'information de comparaison et l'information d'apparence.
